# EUROPÄISCHE PATENTSCHRIFT

(11) **EP 2 235 128 B1**
(45) Veröffentlichungstag und Bekanntmachung des Hinweises auf die Patenterteilung: **20.06.2012**
(21) Anmeldenummer: 09704000.0
(22) Anmeldetag: 12.01.2009
(51) Int. Cl.: C09J 7/00

(54) **POLYOLEFINFOLIE UND VERWENDUNG DERSELBEN**
POLYOLEFIN FILM AND USE THEREOF
FEUILLE POLYOLÉFINIQUE ET SON UTILISATION

(30) Priorität: 22.01.2008 DE 102008005561
(43) Veröffentlichungstag der Anmeldung: 06.10.2010
(73) Patentinhaber: TESA SE, 20253 Hamburg (DE)
(72) Erfinder: MICHEL, Uwe, Comstock Park 49321 Michigan (US); MÜSSIG, Bernhard, 21218 Seevetal (DE)
(86) Internationale Anmeldenummer: PCT/EP2009/050269
(87) Internationale Veröffentlichungsnummer: WO 2009/092641

(56) Entgegenhaltungen:
- EP-A- 1 719 808
- WO-A-00/13888
- WO-A-00/29499
- WO-A-01/44398
- WO-A-2008/077729
- DE-A1- 19 939 076

## Beschreibung

Die Erfindung betrifft eine monoaxial in Längsrichtung verstreckte Polyolefinfolie und die Verwendung derselben.

Folien mit hoher Längsfestigkeit erreicht man üblicherweise durch Verstrecken von extrudierten Folienbahnen aus teilkristallinen Thermoplasten. Dabei handelt es sich überwiegend um eine biaxiale Verstreckung. Im Ausnahmefall sind die Folien zur weiteren Erhöhung der Längszugfestigkeit nur in Längsrichtung verstreckt. Sowohl marktübliche biaxial als auch monoaxial verstreckte Folien auf Basis von Polypropylen weisen aber im Gegensatz zu unverstreckten Folien aus dem Blas- oder Cast-Verfahren geringe Weiterreißwiderstände in Querrichtung auf.

In der Praxis führt dies im Falle von verletzten Kanten (bedingt durch stumpfe Messer beim Schneiden oder späterer unbeabsichtigter Verletzung der Schnittkante) leicht zum Abreißen der Folie beziehungsweise des daraus hergestellten Klebebandes unter Zugbelastung.

Bei hohen Anforderungen an die Steifigkeit (hohe Zugspannung bei sehr geringer Dehnung) und an den Weiterreißwiderstand in Querrichtung werden Folien beziehungsweise Klebebänder mit Filamenten oder Netzen aus Filamenten aus Glas oder Kunststoff verstärkt. Die Herstellung solcher Filamentklebebänder ist anlagenseitig sehr aufwändig und damit teuer und störanfällig. Neben der Basisfolie werden zusätzlich noch die Filamente und Laminierkleber (beziehungsweise eine zusätzliche Haftkleberbeschichtung) benötigt, was die Produkte weiter verteuert. Weitere Nachteile solcher Filamentklebebänder sind geringe Knickbruchbeständigkeit, hohe Dicke, unsaubere Schneidkanten und fehlende Durchschweissbarkeit und Recyclingfähigkeit. Die Herstellung eines derartigen Klebebands wird zum Beispiel in der US 4,454,192 A1 beschrieben.

Gegenstand EP 0 255 866 A1 ist eine in Längsrichtung oder biaxial gereckte Polypropylenfolie. Der beschriebene Zusatz von Polyethylen zur Erhöhung der Schlagzugzähigkeit in Querrichtung führt allerdings zu einer Verringerung der Steifigkeit in Längsrichtung und des Weiterreißwiderstandes in Querrichtung. Das Reckverhältnis in Längsrichtung beträgt 1:5,5 bis 1:7. Es werden Zugfestigkeiten von 12 bis 355 N/mm² erreicht. Angaben über die Spannungen bei 10 %-Dehnung und über den Weiterreißwiderstand in Querrichtung werden nicht gemacht.

Ende der 80er Jahre wurde von der Firma Beiersdorf (Hamburg) ein Aufreißstreifen vertrieben, welcher eine verringerte Abreißneigung aufweist. Dieser enthielt eine in Längsrichtung verstreckten Trägerfolie der Firma NOPI (Harrislee), welche durch Coextrusion von Rohstoffen unterschiedlicher Zähigkeit hergestellt wurde und ein Reckverhältnis von 1:7,5 aufwies. Die zähe Coextrusionsaußenschicht verringert nach dem Prinzip von Impactmodifieren die Ausbildung von Mikrorissen beim Schneiden des Produktes mit scharfen Klingen. Sie vermeidet jedoch nicht Abrisse bedingt durch nachträglich verletzte Kanten (zum Beispiel beim Transport der Rolle oder der Applikation auf den Karton), dies erfordert einen erheblich höheren Weiterreißwiderstand. Die Außenschicht enthält 60 Gew.-% Polypropylencopolymer mit ca. 5 Gew.-% Ethylen und zur Erhöhung der Zähigkeit 40 Gew.-% SBS-Kauschuk, welcher die Lichtbeständigkeit verschlechtert und vor allem zu verringerter Zugfestigkeit (160 N/mm²) und verringerter Spannung bei 10 %-Dehnung (70 N/mm²) der Folie in Längsrichtung führt. Die weniger zähe Hauptschicht enthält 92 Gew.-% des Polypropylencopolymers und 8 Gew.-% des SBS-Kautschuks. Der SBS-Kautschuk senkt den Weiterreißwiderstand einer einschichtigen Folie aus reinem Polypropylencopolymer mit gleichem Reckverhältnis von ca. 240 N/mm auf 70 N/mm.

Die DE 44 02 444 A1 betrifft ein reißfestes Klebeband auf der Basis von monoaxial orientiertem Polyethylen. Es können in mancher Hinsicht ähnliche mechanische Eigenschaften wie bei entsprechenden Polypropylenprodukten erreicht werden. Polyethylen weist jedoch ein bedeutend geringere Wärmebeständigkeit als Polypropylen auf, die sich sowohl bei der Herstellung des Klebebandes (Trocknung von Klebstoff- oder anderen Schichten im Ofen) nachteilig auswirkt als auch bei den späteren Verpackungsanwendungen als Griffband, Kartonverschlussklebeband, Aufreißstreifen oder Kartonverstärkungsstreifen. Die Klebebänder auf den Kartons werden oft heiß, zum Beispiel beim Durchgang durch Druckmaschinen oder nach der Befüllung mit heißen Gütern (zum Beispiel Lebensmitteln). Ein weiterer Nachteil von (auch verstreckten) Polyethylenfolien im Vergleich zu Polypropylenfolien ist die deutlich geringere Kraft bei 10 %-Dehnung. Durch die höhere Dehnung bei gegebener Kraft neigen daraus hergestellte Griffbänder oder Kartonverschlussklebebänder zur Ablösung unter Zugbelastung, und Kartonverstärkungsstreifen können das Einreißen von Kartons nicht verhindern. Das Reckverhältnis in Längsrichtung und erreichbare Spannungen bei 10 %-Dehnung werden nicht offen gelegt. Es werden Zugfestigkeiten von 102 bis 377 N/mm² erreicht.

Die vorbeschriebenen Erfindungen haben Anwendungen gefunden, konnten aber die Zugfestigkeiten und Weiterreißwiderstände von Filamentklebebändern bei weitem nicht erreichen. Infolgedessen hat es Bemühungen gegeben, das aufwändige Aufbringen vieler Filamentfäden zu vermeiden und den verstreckten Folien durch Längsstrukturen filamentartige Eigenschaften zu geben, welche nachfolgend beschrieben sind.

Die US 5,145,544 A1 und die US 5,173,141 A1 beschreiben ein Klebeband aus monoaxial verstreckter Folie, welche eine Rippenstruktur zur Verstärkung aufweist, wobei die Rippen zum Teil aus der Oberfläche herausragen und zum Teil in die Folienoberfläche eingebettet sind. Zwischen Folie und Rippen sind Kerbfugen ausgebildet. Die Erfindung erreicht einen hohen Seiteneinreißwiderstand, die Zugfestigkeit und die Dehnbarkeit hingegen sind noch verbesserungswürdig. Der wesentliche Mangel besteht jedoch darin, dass eine Folie gemäß dieser Erfindung nicht im Produktionsmaßstab herstellbar ist. Die Ursache dafür sind die schlechte Verstreckbarkeit in üblicher Breite sowie eine extrem schlechte Planlage, so dass die Beschichtbarkeit mit Haftkleber nicht mehr gewährleistet ist. Bei hohen Breiten verschlechtert sich zudem die Planlage auch noch durch ungleichmäßige und unzureichende Haftung (bedingt durch die nicht plan aufliegende Folie) auf den Reckwalzen im nachfolgenden Verstreckungsprozess. Bei einer Herstellung in produktionsüblicher Breite wird die Folie im mittleren Bereich auf den Reckwalzen in Querrichtung gehalten, wodurch sich die Rippenstruktur durch Verstrecken verändert und die gesamte Produktqualität inhomogen wird. Ein weiterer Nachteil ist die Notwendigkeit einer mindestens 50 %igen Einbettung der Rippen durch einen Kalander, welcher in der Investition sehr teuer ist und den Prozess viel aufwändiger macht. Die Rippenstruktur an der Oberfläche führt auch leicht zu Beschichtungsfehlem beim Auftragen von Releasemitteln oder Primern bei der Weiterverarbeitung zu Klebebändern, da die Auftragsverfahren für Folien eine glatte Oberfläche erfordern. Abdrücke von Verstärkungsfilamenten oder Rippenstrukturen in der Oberfläche von Folien sind für die Bedruckung nachteilig, die glatte Oberflächen voraussetzt. Insbesondere bei einer Nutzung der erfindungsgemäßen Folie für ein Verpackungsklebeband ist die Bedruckbarkeit für den Kunden ein wichtiges Kriterium. Der US 5,145,544 A1 werden ein Reckverhältnis von 1:7 und Zugfestigkeiten von 157 bis 177 N/mm² entnommen, Spannungen bei 10 %-Dehnung werden nicht ermittelt. Der US 5,173,141 A1 werden Reckverhältnisse von 1:6,1 bis 1:7 und Zugfestigkeiten bis zu 245 N/mm² entnommen, Spannungen bei 10 %-Dehnung werden nicht ermittelt.

Die EP 1 101 808 A1 versucht, die genannten Nachteile zu beseitigen, indem die Rippenstrukturen in das Innere der Folie verlegt wurden. Die Folie weist planparallele Außenseiten auf und enthält mindestens zwei coextrudierte Schichten unterschiedlicher Zusammensetzung, deren Grenzfläche nicht eben ist, sondern im Querschnitt einen nicht geraden Grenzverlauf aufweist, der sich in Längsrichtung laminar fortsetzt. Die besondere innere Struktur der Folie beruht darauf, dass die Dicke einer Schicht in Querrichtung periodisch oder unregelmäßig variiert und die zweite Schicht die Dickenschwankungen derart kompensiert, dass die Gesamtdicke im Wesentlichen konstant ist. Alle genannten Ausführungsformen weisen gegenüber einer normalen Klebebandfolie verbesserte Zugfestigkeit und E-Modul in Längsrichtung auf. Die Reckverhältnisse liegen zwischen 1:6,7 und 1:8,7. An Zugfestigkeiten werden 202 bis 231 N/mm² und an Spannungen bei 10 %-Dehnung 103 bis 147 N/mm² erreicht.

Alle geschilderten Varianten werden nicht großtechnisch umgesetzt, da die Herstellverfahren sehr aufwändig sind. Des Weiteren können sie die Eigenschaften von Produkten mit Glas- oder Polyesterfilamenten bei weitem nicht erreichen.

Aufgabe der Erfindung ist es, eine Folie insbesondere für ein Klebeband zur Verfügung zu stellen, die die genannten Nachteile der Folien des Standes der Technik nicht aufweist.

Gelöst wird diese Aufgabe durch eine Folie, wie sie im Hauptanspruch näher gekennzeichnet ist. In den Unteransprüchen sind vorteilhafte Ausführungsformen der Erfindung beschrieben. Des Weiteren ist die Verwendung der erfindungsgemäßen Folie vom Erfindungsgedanken umfasst.

Demgemäß betrifft die Erfindung eine monoaxial in Längsrichtung verstreckte Polyolefinfolie, welche eine Mischung aus einem olefinischen und einem polaren nichtolefinischen Polymer enthält, wobei das polare nichtolefinische Polymer ein Polymer ist, welches a) kein Olefin als Monomer und b) als polare Komponente Heteroatome wie Schwefel, Stickstoff, Phosphor und vorzugsweise Sauerstoff enthält, und die Folie ein Reckverhältnis in Längsrichtung von mindestens 1:4,5 aufweist.

Der Anteil an polarem nichtolefinischem Polymer in der Mischung liegt vorzugsweise im Bereich von 5 bis 30 Gew.-%.

Zur Erzielung von hohen Zugfestigkeiten, von hohen Spannungen bei 10 %-Dehnung und von hohem Weiterreißwiderstand sollten die Reckprozessbedingungen so gewählt werden, dass das Reckverhältnis das für Folie jeweils maximal technisch durchführbare ist. Erfindungsgemäß liegt das Reckverhältnis in Längsrichtung bei mindestens 1:4,5, vorzugsweise bei mindestens 1:7

Ein Reckverhältnis von zum Beispiel 1:6 gibt an, dass aus einem Abschnitt der Primärfolie von 1 m Länge ein Abschnitt von 6 m Länge der gereckten Folie entsteht. Oft wird das Reckverhältnis auch als Quotient der Liniengeschwindigkeit vor der Verstreckung und der Liniengeschwindigkeit nach der Verstreckung bezeichnet.

In einer bevorzugten Ausführung der Erfindung weist die Folie die folgenden Eigenschaften auf:
- in Längsrichtung eine Zugfestigkeit von mindestens 200 N/mm², vorzugsweise mindestens 300 N/mm², weiter vorzugsweise mindestens 400 N/mm²,
- in Längsrichtung eine Spannung bei 10 %-Dehnung von mindestens 150 N/mm², vorzugsweise mindestens 200 N/mm², weiter vorzugsweise mindestens 250 N/mm² und/oder
- in Querrichtung einen Weiterreißwiderstand von mindestens 400 N/mm, vorzugsweise mindestens 800 N/mm, weiter vorzugsweise mindestens 1500 N/mm.

Zur Berechnung von Festigkeitswerten werden die breitenbezogenen Kraftwerte durch die Dicke geteilt. Im Fall einer Bestimmung der Festigkeitswerte am Klebeband wird als Dicke nicht die Gesamtdicke des Klebebands, sondern nur die der Trägerfolie zugrunde gelegt.

Die Dicke der Trägerfolie liegt vorzugsweise zwischen 15 und 200 µm, besonders bevorzugt zwischen 30 und 140 µm, ganz besonders bevorzugt zwischen 50 und 90 µm.

Das olefinische Polymer ist ein Homo- oder Copolymer von Olefinen wie Ethylen, Propylen oder Butylen. Der Begriff Copolymer in hier sinngemäß dahingehend zu verstehen, dass er Terpolymere mit einschließt.

Das olefinische Polymer enthält vorzugsweise mindestens 50 Gew.-% Propylen, besonders bevorzugt handelt es sich um ein Propylenhomopolymer.

Besonders geeignete Folienrohstoffe sind kommerziell erhältliche Polypropylenhomopolymere oder Polypropylencopolymere einschließlich der Block- (Impact-) und Randompolymere.

Die Schmelzindizes der genannten Polymere müssen im für Flachfolienextrusion geeigneten Bereich liegen. Dieser Bereich sollte zwischen 0,3 und 15 g/10 min, vorzugsweise im Bereich von 0,8 und 5 g/10 min (gemessen bei 230 °C/2,16 kg) liegen. Das Polypropylen ist vorzugsweise überwiegend isotaktisch aufgebaut. Der Biegemodul sollte mindestens 1000 MPa, vorzugsweise mindestens 1500 MPa, ganz besonders vorzugsweise mindestens 2000 MPa betragen.

Unter einem polaren nichtolefinischen Polymer werden alle Polymere verstanden, welche a) kein Olefin wie zum Beispiel Ethylen, Propylen oder Butylen als Monomer enthalten und b) als polare Komponente Heteroatome wie Schwefel, Stickstoff, Phosphor und vorzugsweise Sauerstoff enthalten. Das polare nichtolefinische Polymer wird vorzugsweise aus der Gruppe der Polyester, Polyamide, Polyurethane, Polyoxymethylen, Polyarylensulfide und Polyarylenoxide ausgewählt. Besonders bevorzugt sind teilkristalline Polymere. Gemäß einer besonders vorteilhaft gestalteten Ausführungsform der Erfindung werden als polares nichtolefinisches Polymer Polybutylenterephthalat und/oder Polyoxymethylen gewählt.

In der bevorzugten Ausführungsform besteht die Matrix aus dem olefinischen Polymer, worin das polare nichtolefinische Polymer in Form von Fasern eingebettet ist.

Die Fasern weisen vorzugsweise einen Durchmesser von 0,01 bis 50 µm, besonders bevorzugt 0,1 bis 20 µm auf.

Die Dimensionen der Fasern und damit die mechanischen Eigenschaften der Folie können durch den Herstellprozess und die Zugabe eines polar modifizierten Polyolefins als dritte Komponente in der Mischung eingestellt werden.

Das polar modifizierte Polyolefin wird vorzugsweise aus der Gruppe der Copolymere von Olefinen mit Vinylestern, Methacrylsäure und Acrylsäure, besonders bevorzugt Ethylen-Vinylacetat- und Ethylen-(Meth)acrylat-Copolymere sowie deren Ester oder aus der Gruppe der Pfropfpolymere mit einer ungesättigten organischen Säure, besonders bevorzugt ein maleinsäureanhydrid-, methacrylsäure oder acrylsäuregepropftes Polyolefin ausgewählt, wobei der Anteil an polar modifiziertem Polyo!efin in der Mischung vorzugsweise im Bereich von 0,2 bis 10 Gew.-% liegt.

Die Polymere der Folie können in Reinform oder in Abmischung mit Additiven wie Antioxidantien, Lichtschutz-, Antiblock-, Gleit- und Verarbeitungshilfsmitteln, Füllstoffen, Farbstoffen, Pigmenten, Treib- oder Nucleierungsmitteln verwendet werden.

Die Folie kann zum Beispiel als Träger für ein Klebeband verwendet werden. Ein solches Klebeband ist zur Verstärkung von Kartonagen insbesondere im Bereich von Stanzungen, als Aufreißstreifen für Kartons und zum Bündeln von Gegenständen geeignet. Solche Gegenstände sind zum Beispiel Rohre, Profile oder gestapelte Kartons (Strapping-Anwendung). Da die erfindungsgemäße Folie selbst im Fall von verletzten Kanten in Querrichtung praktisch nicht durchreißbar ist, können Abrisse von Aufreißstreifen oder das Weiterreißen von verstärkten Kartonstanzungen vermieden werden. Derartige Folien neigen zum Verlauf eines Risses in Längsrichtung, welche im Fall einer Kantenbeschädigung oder Anstanzung das Abreißen in Querrichtung durch Umlenkung des Risses in Längsrichtung verhindert.

Der bevorzugte Prozess zur Herstellung der Folie beziehungsweise eines unter Verwendung der Folie hergestellten Klebebandes dieser Erfindung beinhaltet folgende Schritte:
- Polymere und gegebenenfalls Additive werden gemischt und in einem Extruder einer Flachfoliendüse zugeführt.
- Der Schmelzefilm wird dann auf einer so genannten "Chillroll" kontrolliert abgekühlt.
- Bevor die Folienbahn dem Reckwerk zugeführt wird, wird sie über temperierte Walzen auf eine geeignete Recktemperatur aufgeheizt.
- Dann wird die Folie im Kurzspalt in Maschinenrichtung orientiert.
- Die Trägerfolie wird durch Beschichtung oder schon vorher durch Coextrusion mit einer Klebemasse versehen.

Die Folie kann ein- oder mehrschichtig sein, vorzugsweise ist sie mehrschichtig, besonders bevorzugt vom Typ ABC, wobei B die erfindungsgemäße Mischung enthält und A und/oder C ganz oder überwiegend aus polyolefinischem Polymer bestehen. Bei solchen Folien ohne Coextrusionsschichten können aus der Oberfläche der Folien Fasern austreten, welche bei der Weiterverarbeitung stören können. Dies gilt insbesondere für den Fall einer besonders hohen Verstreckung zur Erzielung hoher Spannungswerte bei 1 %- und 10 %-Dehnung. Durch die Coextrusion können Faserablagerung beim Verstrecken der Folie und Probleme beim Beschichten mit Release, Primer oder Klebemasse vermieden werden. Daher wird eine dreischichtige Folie des Aufbaus ABA bevorzugt, wobei B die erfindungsgemäße Mischung enthält und die Außenschichten A aus mindestens einem Polyolefin bestehen. Das Polyolefin der Schicht A ist bevorzugt entweder das Polyolefin der Schicht B oder ein Polypropylenhomopolymer. Als ein weiterer Vorteil einer oder mehrerer A-Schichten oder einer A- und einer B-Schicht hat sich eine höhere Zähigkeit der Folie in Querrichtung herausgestellt. Sie neigt daher bei Querbelastung weniger zum Reißen. Weiterhin steigt dadurch auch die Zähigkeit senkrecht zur Folienoberfläche, das heißt, im Fall von Lackierfehlern (stellenweise fehlende Releasebeschichtung durch elektrostatische Aufladung der Folie) sinkt das Risiko von Shredding (Spalten der Folie in der dritten Dimension).

Die Folie kann durch Kaschierung, Prägung oder Strahlenbehandlung modifiziert sein.

Die Folie kann mit Oberflächenbehandlungen versehen sein. Dies sind zum Beispiel zur Haftvermittlung Corona-, Flamm-, Fluor- oder Plasmabehandlung oder Beschichtungen von Lösungen oder Dispersionen oder flüssige strahlenhärtbare Materialien. Weitere mögliche Beschichtungen sind Bedruckungen und Antihaftbeschichtungen, zum Beispiel solche aus vernetzten Silikonen, Acrylaten (zum Beispiel Primat® 205), Polymeren mit Vinylidenchlorid oder Vinylchlorid als Monomer oder Stearylverbindungen wie Polyvinylstearylcarbamat der Chromstearatkomplexen (zum Beispiel Quilon® C) oder Umsetzungsprodukten aus Maleinsäureanhydridcopolymeren und Stearylamin.

Als Klebeband wird erfindungsgemäß eine Folie mit einer selbstklebenden oder einer hitzeaktivierbaren Klebstoffschicht bevorzugt. Vorzugsweise handelt es sich jedoch nicht um siegelfähige Klebstoffe, sondern um Haftkleber. Die Folie wird für die Klebebandanwendung ein- oder beidseitig mit Haftkleber als Lösung oder Dispersion oder 100 %ig (zum Beispiel aus der Schmelze) oder durch Coextrusion mit der Folie beschichtet. Die Klebeschicht(en) kann durch Wärme oder energiereiche Strahlen vernetzt und erforderlichenfalls mit Trennfolie oder Trennpapier abgedeckt werden. Insbesondere sind Haftkleber auf Basis Acrylat, Naturkautschuk, thermoplastischem Styrolblockcopolymer oder Silikon geeignet.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Zur Optimierung der Eigenschaften kann die zum Einsatz kommende Selbstklebemasse mit einem oder mehreren Additiven wie Klebrigmachern (Harzen), Weichmachern, Füllstoffen, Pigmenten, UV-Absorbern, Lichtschutz-, Alterungsschutz, Vernetzungsmitteln, Vernetzungspromotoren oder Elastomeren abgemischt sein.

Geeignete Elastomere zum Abmischen sind zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.

Klebrigmacher sind beispielsweise Kohlenwasserstoffharze (zum Beispiel aus ungesättigten C₅- oder C₇-Monomeren), Terpenphenolharze, Terpenharze aus Rohstoffen wie α- oder β-Pinen, aromatische Harze wie Cumaron-Inden-Harze oder Harze aus Styrol oder α-Methylstyrol wie Kolophonium und seine Folgeprodukte wie disproportionierte, dimerisierte oder veresterte Harze, wobei Glycole, Glycerin oder Pentaerythrit eingesetzt werden können. Besonders geeignet sind alterungsstabile Harze ohne olefinische Doppelbindung wie zum Beispiel hydrierte Harze.

Geeignete Füllstoffe und Pigmente sind beispielsweise Ruß, Titandioxid, Calciumcarbonat, Zinkcarbonat, Zinkoxid, Silicate oder Kieselsäure.

Geeignete UV-Absorber, Lichtschutz- und Alterungsschutzmittel für die Klebemassen sind solche, wie sie in dieser Schrift für die Stabilisierung der Folie aufgeführt werden.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Vernetzungsmittel sind beispielsweise Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacryläure.

Eine bevorzugte Ausführungsform enthält einen Haftkleber aus Naturkautschuk, Kohlenwasserstoffharz und Antioxidant.

Die Beschichtungsstärke mit Klebemasse liegt vorzugsweise im Bereich von 18 bis 50 g/m², insbesondere 22 bis 29 g/m². Die Breite der Klebebandrollen liegt vorzugsweise im Bereich von 2 bis 60 mm.

### Prüfmethoden

Dicke: DIN 53370
Zugfestigkeit: DIN 53455-7-5 in Längsrichtung
Zugspannung 10 %-Dehnung: DIN 53455-7-5 in Längsrichtung
Bruchdehnung: DIN 53455-7-5 in Längsrichtung
Schlagzugzähigkeit in Querrichtung: DIN EN ISO 8256
• (Einspannlänge 10 mm, 7,5 J Pendel, 5 Lagen, Joch 30 g)
Weiterreißwiderstand in Querrichtung: DIN 53363-2003-10
Schmelzindex für PP: DIN 53735 (230 °C, 2,16 kg)
Schmelzindex für PBT: DIN 53735 (250 °C, 2,16 kg)
Schmelzindex für POM/EVAL/PE-LLD: DIN 53735 (190 °C, 2,16 kg)
Schmelzindex für PS-HI: DIN 53735 (200 °C, 5 kg)
Biegemodul (Flexural Modulus): ASTM D 790 A
Klebtechnische Daten: AFERA 4001 (entsprechend DIN EN 1939)

Im Folgenden soll die Erfindung anhand von Beispielen erläutert werden, ohne diese dadurch einzuschränken.

### Beispiele

### Rohstoffe

Dow 7C06:
   PP-Blockcopolymer, MFI 1,5 g/10 min, nicht nucleiert, Biegemodul 1280 MPa (Dow Chemical)
Bormod HD 905 CF:
   PP-Homopolymer, MFI 6 g/10 min, Biegemodul 2150 MPa, enthält ein α-Nucleierungsmittel (Borealis)
Dowlex 2032:
   PE-LLD, MFI 2 g/10 min (Dow Chemical)
Styron 457:
   PS-HI, MFI 3 g/10 min, Biegemodul 2200 MPa (Dow Chemical)
EVAL G156B:
   EVAL Ethylengehalt 48 mol-%, MFI 6,4 g/10min, Biegemodul 2800 MPa (EVAL Europe)
Licocene PP MA 7452 GR TP:
   PP-g-MA, mit Maleinsäureanhydrid gepfropftes Metallocenpolypropylenwachs (Clariant)
Hostaform C9021 natur:
   POM, MFI 8 g/10 min, Biegemodul 2800 MPa (Ticona)
Celanex 2002-2 natur:
   PBT, MFI 20, Biegemodul 2500 MPa (Ticona)

### Beispiel 1

Die Folie wird auf einer Einschneckenextrusionsanlage mit Flachdüse mit flexibler Düsenlippe in einer Schicht hergestellt, gefolgt von Chillrollstation und einer einstufigen Kurzspaltreckanlage.

Dow 7C06, Celanex 2002-2 natur und Licocene PP MA 7452 GR TP werden im Verhältnis 15:4:1 gemischt und extrudiert. Die Düsentemperatur beträgt 230 °C. Chillroll-Temperaturen and Reckwalzen-Temperaturen werden so eingestellt, dass die Kristallinität der Folie vor und nach dem Reckvorgang so hoch wie möglich wird. Das Reckverhältnis beträgt 1:5.

Folieneigenschaften:

| | |
|---|---|
| Trägerdicke nach Reckung/ µm | 80 |
| Spannung bei 1 %-Dehnung/ MPa | 23,6 |
| Spannung bei 10 %-Dehnung/ MPa | 154 |
| Zugfestigkeit/ MPa | 220 |
| Bruchdehnung/ % | 26 |
| Weiterreißwiderstand/ N/mm | 1220 |
| Schlagzugzähigkeit quer/ mJ/mm² | 63 |

Die Folie wird beidseitig coronavorbehandelt, auf der Oberseite mit einer 0,5 %igen Lösung von PVSC in Toluol als Release beschichtet und getrocknet. Der Klebstoff wird aus 42 Gew.-% SIS-Elastomer, 20 Gew.-% Pentaerythritester des hydrierten Kolophoniums, 37 Gew.-% eines C₅-Kohlenwasserstoffharzes mit einem R&B-Wert von 85 °C und 1 Gew.-% Antioxidans Irganox® 1010 in der Schmelze gemischt und bei 150 °C mit einer Düse auf die Folienunterseite aufgetragen. Anschließend wird das Klebeband zur Mutterrolle gewickelt und zur weiteren Prüfung in 15 mm Breite geschnitten.

Klebtechnische Daten:
- Klebkraft auf Stahl 2,4, N/cm
- Abrollkraft bei 0,3 m/min 1,0 N/cm
- Masseauftrag 24 g/m².

### Beispiel 2

Die Folie wird auf einer Coextrusionsanlage mit Flachdüse mit flexibler Düsenlippe in drei Schichten in ABA-Aufbau hergestellt, gefolgt von Chillrollstation und einer einstufigen Kurzspaltreckanlage. Beide Außenschichten bestehen aus Bormod HD 905 CF. Die Mittelschicht besteht aus Bormod HD 905 CF, Hostaform C9021 natur und EVAL G156B, gemischt im Verhältnis 44:5:1. Die Düsentemperatur beträgt 230 °C. Die Chillroll-Temperatur und die Reckwalzen-Temperaturen werden so eingestellt, dass die Kristallinität der Folie vor und nach dem Reckvorgang so hoch wie möglich wird. Das Reckverhältnis beträgt 1:8.

Folieneigenschaften:

| | |
|---|---|
| Trägerdicke nach Reckung/ µm | 60 |
| Spannung bei 10 %-Dehnung/ MPa | 264 |
| Zugfestigkeit/ MPa | 297 |
| Weiterreißwiderstand/ N/mm | 1600 |
| Bruchdehnung/ % | 12,7 |
| Schlagzugzähigkeit quer/ mJ/mm² | 150 |

Die Folie wird beidseitig coronavorbehandelt, auf der Oberseite mit einem lösungsmittelfreien Silikon beschichtet, welches anschließend mit UV-Strahlen vernetzt wird. Die Unterseite wird mit einem Primer aus Naturkautschuk, Cyclokautschuk und 4,4'-Diisocyanato-diphenylmethan versehen. Der Klebstoff wird aus 40 Gew.-% Naturkautschuk SMRL (Mooney 70), 10 Gew.-% Titandioxid, 37 Gew.-% eines C₅-Kohlenwasserstoffharzes mit einem R&B-Wert von 95 °C und 1 Gew.-% Antioxidans Vulkanox® BKF in einem Kneter in Hexan gelöst. Die 20 Gew.-%ige Klebemasse wird mit einem Streichbalken die geprimerte Folienunterseite aufgetragen und bei 115 °C getrocknet. Anschließend wird das Klebeband zur Mutterrolle gewickelt und zur weiteren Prüfung in 15 mm Breite geschnitten.

Klebtechnische Daten:
- Klebkraft auf Stahl 1,8 N/cm
- Abrollkraft bei 0,3 m/min 0,3 N/cm
- Masseauftrag 23 g/m².

### Vergleichsbeispiel 1

Eine Folie und ein Klebeband werden analog Beispiel 1 aus Dow 7C06 mit einem Reckverhältnis von 1:6,1 hergestellt.

Folieneigenschaften:

| | |
|---|---|
| Trägerdicke nach Reckung/ µm | 80 |
| Spannung bei 1 %-Dehnung/ MPa | 16 |
| Spannung bei 10 %-Dehnung/ MPa | 142 |
| Zugfestigkeit/ MPa | 247 |
| Bruchdehnung/ % | 32 |
| Weiterreißwiderstand N/mm | 240 |
| Schlagzugzähigkeit quer/ mJ/mm² | 258 |

### Vergleichsbeispiel 2

Dow 7C06 und Styron 457 werden im Verhältnis 4:1 gemischt und daraus eine Folie und ein Klebeband analog Beispiel 1 mit einem Reckverhältnis von 1:8 hergestellt.

Folieneigenschaften:

| | |
|---|---|
| Trägerdicke nach Reckung/ µm | 70 |
| Spannung bei 1 %-Dehnung/ MPa | 12 |
| Spannung bei 10 %-Dehnung/ MPa | 222 |
| Zugfestigkeit/ MPa | 260 |
| Bruchdehnung/ % | 39 |
| Weiterreißwiderstand N/mm | 217 |
| Schlagzugzähigkeit quer/ mJ/mm² | 312 |

### Vergleichsbeispiel 3

Dow 7C06 und Dowlex 2032 werden im Verhältnis 41:9 gemischt und daraus eine Folie und ein Klebeband analog Beispiel 1 mit einem Reckverhältnis von 1:6,4 hergestellt.

Folieneigenschaften:

| | |
|---|---|
| Trägerdicke nach Reckung/ µm | 120 |
| Spannung bei 1 %-Dehnung/ MPa | 30,3 |
| Spannung bei 10 %-Dehnung/ MPa | 174 |
| Zugfestigkeit/ MPa | 335 |
| Bruchdehnung/ % | 33,4 |
| Weiterreißwiderstand N/mm | 284 |
| Schlagzugzähigkeit quer/ mJ/mm² | 240 |

## Patentansprüche

1. Polyolefinfolie insbesondere für ein Klebeband, die monoaxial in Längsrichtung verstreckt ist,
**dadurch gekennzeichnet, dass**
die Folie eine Mischung aus einem olefinischen und einem polaren nichtolefinischen Polymer enthält, wobei das polare nichtolefinische Polymer ein Polymer ist, welches a) kein Olefin als Monomer und b) als polare Komponente Heteroatome wie Schwefel, Stickstoff, Phosphor und vorzugsweise Sauerstoff enthält,
und die Folie ein Reckverhältnis in Längsrichtung von mindestens 1:4,5 aufweist.

2. Polyolefinfolie nach Anspruch 1,
**dadurch gekennzeichnet, dass**
der Anteil an polarem nichtolefinischem Polymer in der Mischung im Bereich von 5 bis 30 Gew.-% liegt.

3. Polyolefinfolie nach Anspruch 1 oder 2,
**dadurch gekennzeichnet, dass**
die Folie
• In Längsrichtung ein Reckverhältnis von mindestens 1:7,
• in Längsrichtung eine Zugfestigkeit von mindestens 200 N/mm², vorzugsweise mindestens 300 N/mm², weiter vorzugsweise mindestens 400 N/mm²,
• in Längsrichtung eine Spannung bei 10 %-Dehnung von mindestens 150 N/mm², vorzugsweise mindestens 250 N/mm² und/oder
• in Querrichtung einen Weiterreißwiderstand von mindestens 400 N/mm, vorzugsweise mindestens 800 N/mm, weiter vorzugsweise mindestens 1500 N/mm aufweist.

4. Polyolefinfolie nach zumindest einem der Ansprüche 1 bis 3,
**dadurch gekennzeichnet, dass**
die Folie eine Dicke von 15 bis 200 µm, vorzugsweise 30 bis 140 µm, besonders vorzugsweise 50 bis 90 µm aufweist.

5. Polyolefinfolie nach zumindest einem der vorherigen Ansprüche,
**dadurch gekennzeichnet, dass**
das olefinische Polymer zu mindestens 50 Gew.-% Propylen enthält.

6. Polyolefinfolie nach zumindest einem der vorherigen Ansprüche,
**dadurch gekennzeichnet, dass**
das polare nichtolefinische Polymer gewählt ist aus der Gruppe der Polyester, der Polyamide, des Polyoxymethylens, der Polyarylensulfide, der Polyarylenoxide und der Polyurethane, bevorzugt Polybutylenterephthalat, wobei das nichtolefinische Polymer bevorzugt teilkristallin ist.

7. Polyolefinfolie nach zumindest einem der vorherigen Ansprüche,
**dadurch gekennzeichnet, dass**
die Mischung als dritte Komponente ein polar modifiertes Polyolefin vorzugsweise aus der Gruppe der Copolymere von Olefinen mit Vinylestern, Methacrylsäure und Acrylsäure, besonders bevorzugt Ethylen-Vinylacetat- und Ethylen-(Meth)acrylatCopolymere sowie deren Ester oder aus der Gruppe der Pfropfpolymere mit einer ungesättigten organischen Säure, besonders bevorzugt ein maleinsäureanhydrid-, methacrylsäure- oder acrylsäuregepropftes Polyolefin enthält, wobei der Anteil an polar modifiziertem Polyolefin in dieser Mischung vorzugsweise im Bereich von 0,2 bis 10 Gew.-% liegt.

8. Verwendung einer Polyolefinfolie nach zumindest einem der vorherigen Ansprüche als Verpackungs- oder Bündelungsfolie.

9. Verwendung einer Polyolefinfolie nach zumindest einem der vorherigen Ansprüche als Trägerfolie in einem Klebeband.

10. Verwendung einer Polyolefinfolie nach zumindest einem der vorherigen Ansprüche als Trägerfolie in einem Klebeband insbesondere zur Verstärkung von Kartonagen insbesondere im Bereich von Stanzungen, als Aufreißstreifen für Kartons oder zum Bündeln von Gegenständen.

## Claims

1. Polyolefin film, in particular for an adhesive tape, which is oriented monoaxially in longitudinal direction,
**characterized in that**
the film comprises a mixture of an olefinic polymer and a polar nonolefinic polymer, wherein the polar nonolefinic polymer is a polymer which comprises a) no olefin as monomer and b) as a polar component heteroatoms such as sulfur, nitrogen, phosphorous, and - preferably - oxygen, and the film has a draw ratio in longitudinal direction of at least 1:4.5.

2. Polyolefin film according to Claim 1,
**characterized in that**
the fraction of polar nonolefinic polymer in the mixture is in the range from 5% to 30% by weight.

3. Polyolefin film according to Claim 1 or 2,
**characterized in that**
the film has
• a draw ratio in longitudinal direction of at least 1:7,
• a tensile strength in longitudinal direction of at least 200 N/mm², preferably at least 300 N/mm², more preferably at least 400 N/mm²,
• a stress at 10% elongation in longitudinal direction of at least 150 N/mm², preferably at least 250 N/mm², and/or
• a tear propagation resistance in transverse direction of at least 400 N/mm, preferably at least 800 N/mm, more preferably at least 1500 N/mm.

4. Polyolefin film according to at least one of Claims 1 to 3,
**characterized in that**
the film has a thickness of 15 to 200 µm, preferably 30 to 140 µm, more preferably 50 to 90 µm.

5. Polyolefin film according to at least one of the preceding claims,
**characterized in that**
the olefinic polymer comprises propylene to an extent of at least 50% by weight.

6. Polyolefin film according to at least one of the preceding claims,
**characterized in that**
the polar nonolefinic polymer is selected from the group of polyesters, polyamides, polyoxymethylene, polyarylene sulfides, polyarylene oxides, and polyurethanes, preferably polybutylene terephthalate, and the nonolefinic polymer is preferably partially crystalline.

7. Polyolefin film according to at least one of the preceding claims,
**characterized in that**
the mixture comprises as a third component a polar-modified polyolefin preferably from the group of the copolymers of olefins with vinyl esters, methacrylic acid and acrylic acid, more preferably ethylene-vinyl acetate copolymers and ethylene-(meth)acrylate copolymers, and esters thereof, or from the group of graft polymers with an unsaturated organic acid, more preferably a maleic anhydride-, methacrylic acid- or acrylic acid-grafted polyolefin, and the fraction of polar-modified polyolefin in this mixture is preferably in the range from 0.2% to 10% by weight.

8. Use of a polyolefin film according to at least one of the preceding claims as packaging film or bundling film.

9. Use of a polyolefin film according to at least one of the preceding claims as carrier film in an adhesive tape.

10. Use of a polyolefin film according to at least one of the preceding claims as carrier film in an adhesive tape, in particular for reinforcing cardboard packaging, especially in the area of die cuts, as tear-open strip for cartons, or for bundling articles.

## Revendications

1. Feuille de polyoléfine, en particulier pour une bande adhésive qui est étirée monoaxialement dans le sens longitudinal, **caractérisée en ce que** la feuille contient un mélange d'un polymère oléfinique et d'un polymère non oléfinique polaire, le polymère non oléfinique polaire étant un polymère qui a) ne contient pas d'oléfine comme monomère et b) contient comme composant polaire des hétéroatomes tels que le soufre, l'azote, le phosphore et de préférence de l'oxygène,
et la feuille présente un rapport d'étirement dans le sens longitudinal d'au moins 1:4,5.

2. Feuille de polyoléfine selon la revendication 1, **caractérisée en ce que** la proportion de polymère non oléfinique polaire dans le mélange se situe dans la plage de 5 à 30% en poids.

3. Feuille de polyoléfine selon la revendication 1 ou 2, **caractérisée en ce que** la feuille présente
- dans le sens longitudinal, un rapport d'étirement d'au moins 1:7,
- dans le sens longitudinal, une résistance à la traction d'au moins 200 N/mm², de préférence d'au moins 300 N/mm², plus préférablement d'au moins 400 N/mm²
- dans le sens longitudinal, une tension à un allongement de 10% d'au moins 150 N/mm², de préférence d'au moins 250 N/mm² et/ou
- dans le sens transversal, une résistance à la propagation d'une déchirure d'au moins 400 N/mm, de préférence d'au moins 800 N/mm, plus préférablement d'au moins 1500 N/mm.

4. Feuille de polyoléfine selon au moins l'une quelconque des revendications 1 à 3, **caractérisée en ce que** la feuille présente une épaisseur de 15 à 200 µm, de préférence de 30 à 140 µm, en particulier de préférence de 50 à 90 µm.

5. Feuille de polyoléfine selon au moins l'une quelconque des revendications précédentes, **caractérisée en ce que** le polymère oléfinique contient au moins 50% en poids de propylène.

6. Feuille de polyoléfine selon au moins l'une quelconque des revendications précédentes, **caractérisée en ce que** le polymère polaire non oléfinique est choisi dans le groupe formé par les polyesters, les polyamides, le polyoxyméthylène, les poly(sulfures d'arylène), les poly(oxydes d'arylène) et les polyuréthanes, de préférence le poly(téréphtalate de butylène), le polymère non oléfinique étant de préférence partiellement cristallin.

7. Feuille de polyoléfine selon au moins l'une quelconque des revendications précédentes, **caractérisée en ce que** le mélange contient, comme troisième composant, une polyoléfine modifiée de manière polaire, de préférence du groupe formé par les copolymères d'oléfines avec des esters de vinyle, l'acide méthacrylique et l'acide acrylique, de manière particulièrement préférée les copolymères d'éthylène-acétate de vinyle et d'éthylène-(méth)acrylate ainsi que leurs esters ou du groupe formé par les polymères greffés par un acide organique insaturé, de manière particulièrement préférée une polyoléfine greffée par un anhydride de l'acide maléique, l'acide méthacrylique ou l'acide acrylique, la proportion de polyoléfine modifiée de manière polaire dans ce mélange étant de préférence située dans la plage de 0,2 à 10% en poids.

8. Utilisation d'une feuille de polyoléfine selon au moins l'une quelconque des revendications précédentes comme feuille d'emballage ou de ficelage.

9. Utilisation d'une feuille de polyoléfine selon au moins l'une quelconque des revendications précédentes comme feuille support dans une bande adhésive.

10. Utilisation d'une feuille de polyoléfine selon au moins l'une quelconque des revendications précédentes comme feuille support dans une bande adhésive, en particulier pour le renforcement de cartonnages, en particulier dans le domaine des découpages, comme bandelette d'arrachage pour cartons ou pour ficeler des objets.
